# EUROPEAN PATENT SPECIFICATION

(11) **EP 4 379 935 B1**
(45) Date of publication and mention of the grant of the patent: **13.05.2026**
(21) Application number: 22916717.6
(22) Date of filing: 27.12.2022
(51) Int. Cl.: H01M 50/249, H01M 50/342, H01M 50/367, H01M 50/375, H01M 50/54, H01M 50/581

(54) **BATTERY PACK, AND ESS AND VEHICLE INCLUDING THE BATTERY PACK**
BATTERIEPAKET SOWIE ESS UND FAHRZEUG MIT DEM BATTERIEPAKET
BLOC-BATTERIE, ET SYSTÈME DE STOCKAGE D'ÉNERGIE (ESS) ET VÉHICULE COMPRENANT LE BLOC-BATTERIE

(30) Priority: 27.12.2021 KR 20210188648
(43) Date of publication of application: 05.06.2024
(73) Proprietor: LG Energy Solution, Ltd., Seoul 07335 (KR)
(72) Inventor: KIM, Seung-Hyun, Daejeon 34122 (KR); OH, Young-Hoo, Daejeon 34122 (KR); OK, Seung-Min, Daejeon 34122 (KR); JO, Sang-Hyun, Daejeon 34122 (KR); CHO, Young-Bum, Daejeon 34122 (KR); HONG, Sung-Goen, Daejeon 34122 (KR)
(74) Representative: Plasseraud IP
(86) International application number: PCT/KR2022/021439
(87) International publication number: WO 2023/128576

(56) References cited:
- WO-A1-2021/201443
- CN-A- 111 584 978
- JP-A- 2007 027 011
- KR-A- 20110 055 371
- KR-A- 20200 080 079
- KR-A- 20210 144 463
- KR-B1- 101 292 988
- US-A1- 2012 263 982

## Description

### TECHNICAL FIELD

The present disclosure relates to a battery pack, and an energy storage system (ESS) and a vehicle including the battery pack.

The present application claims priority to Korean Patent Application No. 10-2021-0188648, filed on December 27, 2021 in the Republic of Korea.

### BACKGROUND ART

A battery pack applied to a device such as an energy storage system (ESS) or an electric vehicle may be manufactured to include a plurality of battery modules to which high-power and high-capacity lithium secondary batteries are applied. To satisfy output characteristics of battery packs applied to devices that require high power and large capacity such as energy storage systems (ESSs) and electric vehicles and to realize high capacity, the number of lithium secondary batteries included in one battery module may be increased and the number of battery modules included in one battery pack may be increased.

However, when a fire or explosion occurs in a battery pack including such a large number of lithium secondary batteries, damage is inevitably increased.

A fire occurring in a battery pack starts from an abnormal temperature increase and generation of internal gas of a lithium secondary battery in a battery module. When a temperature of a lithium secondary battery abnormally rises, internal gas is generated, and internal pressure of the lithium secondary battery increases to a certain level or more, venting occurs in the lithium secondary battery, and thus, high-temperature gas is ejected to the outside of the lithium secondary battery, and a high-temperature spark including an electrode active material and aluminum particles is ejected. When the high-temperature gas and spark meet oxygen, a fire may occur.

In particular, a situation where high-temperature venting gas and a high-temperature spark generated by a thermal event meet a large amount of oxygen is likely to occur when venting gas generated in a battery pack rapidly escapes to the outside at high pressure. That is, because pressure in a battery pack is greatly increased for a moment due to venting of a secondary battery caused by a thermal event, and then, when venting gas is rapidly discharged, the pressure in the battery pack is greatly reduced in a short time, a large amount of oxygen may rather be introduced inward from the outside. In this case, a fire may occur when high-temperature gas and spark remaining in the battery pack and the large amount of oxygen meet each other.

Accordingly, it is necessary to develop a battery pack structure in which venting gas, generated during a thermal event, may be discharged at an appropriate speed despite high venting pressure.

Document US 2012/263982 A1 discusses a battery pack in which prevention of entry of water from the outside is ensured, and when gas is generated from a battery, the gas is safely released to the outside.

WO 2021/201443 A1 discloses the preamble of claim 1.

### DISCLOSURE

### Technical Problem

The present disclosure is designed to solve the problems of the related art, and therefore the present disclosure is directed to minimizing or preventing introduction of external oxygen by discharging venting gas, generated during a thermal event, at an appropriate speed despite high venting pressure.

However, technical objectives to be achieved by the present disclosure are not limited thereto, and other unmentioned technical objectives will be apparent to one of ordinary skill in the art from the description of the present disclosure.

### Technical Solution

A battery pack according to the present disclosure includes a module assembly including a plurality of battery modules arranged in a first direction, a vent channel located on a surface of the module assembly and configured to communicate with each of the plurality of battery modules, and a discharge delay member provided in the vent channel and configured to delay discharge of venting gas generated in at least some of the plurality of battery modules and introduced into the vent channel.

A plurality of discharge delay members are provided, wherein the plurality of discharge delay members are arranged in the first direction.

The discharge delay member may be configured to be melted by the venting gas.

Each of the plurality of battery modules may include an outlet configured to discharge venting gas therein, and the vent channel may include a plurality of inlets each formed at a position corresponding to the outlet.

The battery pack may further include a passage lid configured to cover at least one of the outlet and the plurality of inlets and to be melted by the venting gas.

A space in the vent channel may include a plurality of partition spaces isolated from each other by the discharge delay member, wherein each of the plurality of partition spaces communicates with at least one of the plurality of battery modules.

Each of the plurality of battery modules include a cell assembly including a plurality of battery cells each including an electrode lead, a module housing including at least one open side and configured to accommodate the cell assembly, and a cover frame including a lead slit through which the electrode lead passes and configured to cover the at least one open side of the module housing.

The cover frame is configured to be melted by the venting gas to close the lead slit.

The cover frame may include a first cover frame configured to have a first melting point, and a second cover frame configured to have a second melting point higher than the first melting point.

The first melting point may be a temperature lower than a temperature of the venting gas, and the second melting point may be a temperature higher than the temperature of the venting gas.

The cover frame may be configured so that the first cover frame and the second cover frame overlap each other to contact each other or to be spaced apart from each other, or is configured so that the first cover frame covers the second cover frame.

The battery pack may further include a pack cover facing the cover frame to cover one side of the module assembly.

The battery pack may further include a pack opening formed at at least one of both ends of a space formed between the module assembly and the cover frame in the first direction.

An energy storage system (ESS) according to an embodiment of the present disclosure may include the battery pack of the present disclosure.

A vehicle according to an embodiment of the present disclosure may include the battery pack of the present disclosure.

### Advantageous Effects

According to an aspect of the present disclosure, venting gas generated during a thermal event may be discharged at an appropriate speed despite high venting pressure, and thus, introduction of external oxygen may be minimized or prevented.

However, effects achievable by the present disclosure are not limited thereto, and other unmentioned effects will be apparent to one of ordinary skill in the art from the following detailed description.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view illustrating an outer appearance of a battery pack, according to an embodiment of the present disclosure.
FIG. 2 is a view illustrating an internal structure of a vent channel, according to the present disclosure.
FIG. 3 is a view for describing that a discharge delay member is melted by high-temperature venting gas to open a venting passage.
FIGS. 4 and 5 are views illustrating a communication structure between a battery module and a vent channel, according to the present disclosure.
FIGS. 6 and 7 are views illustrating various correspondence relationships between a battery module and a partition space formed in a vent channel, according to the present disclosure.
FIG. 8 is a view illustrating a shape of a battery module, according to the present disclosure.
FIG. 9 is a view illustrating a battery pack from which a pack cover is removed, according to the present disclosure.
FIGS. 10 and 11 are views illustrating various shapes of a cover frame applied to a battery module, according to the present disclosure.
FIGS. 12 and 13 are views illustrating an embodiment where a pack opening is formed in a battery pack, according to the present disclosure.
FIG. 14 is a view illustrating an energy storage system (ESS), according to an embodiment of the present disclosure.
FIG. 15 is a view illustrating a vehicle, according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

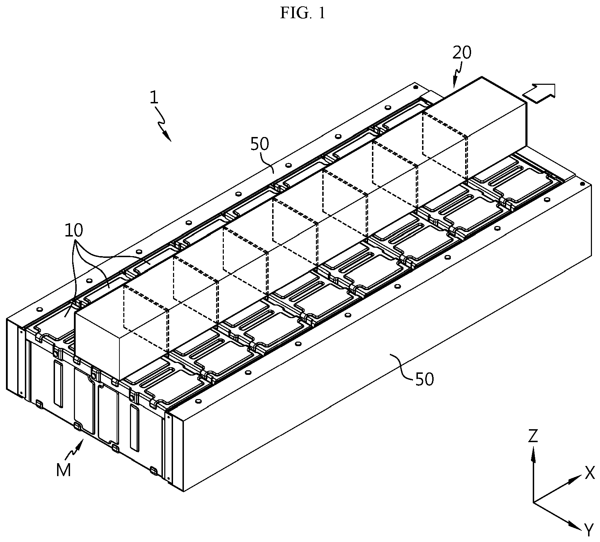

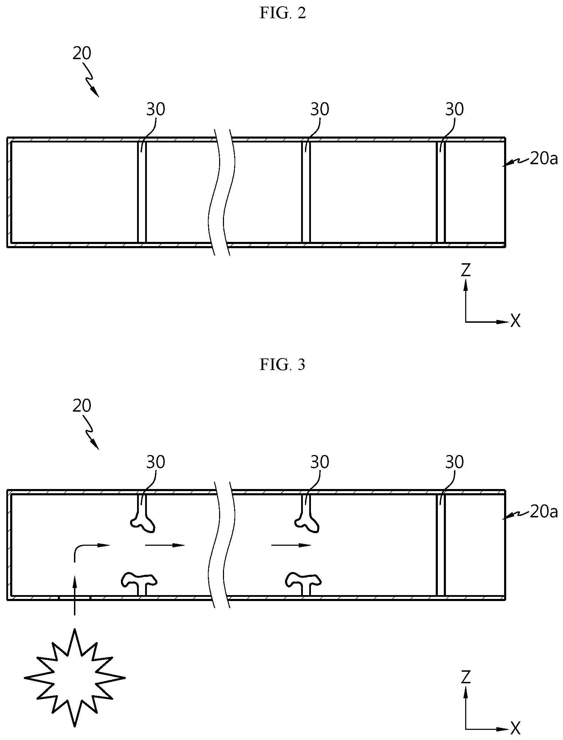

Referring to FIGS. 1 and 2, a battery pack 1 according to an embodiment of the present disclosure may include a module assembly M, a vent channel 20, and a discharge delay member 30. The module assembly M may include a plurality of battery modules 10 arranged in a first direction (direction parallel to an X axis). The vent channel 20 may be located on a surface (surface parallel to an X-Y plane) of the module assembly M. The vent channel 20 may be configured to communicate with each of the plurality of battery modules 10. The discharge delay member 30 may be provided in the vent channel 20. The discharge delay member 30 may be configured to delay discharge of venting gas generated in at least some of the plurality of battery modules 10 and introduced into the vent channel 20.

Because the battery pack 1 of the present disclosure is configured as described above, introduction of oxygen due to negative pressure that may be generated rather inward from the outside due to rapid discharge of venting gas due to a thermal event may be minimized or prevented. In another aspect, because the battery pack 1 includes a separate channel configured to discharge venting gas generated in each of the plurality of battery modules 10, rather than forming a discharge portion for direct venting in a part of the battery module 10, the risk of external oxygen introduction may be greatly reduced.

When gas venting occurs due to abnormality while using a secondary battery, it is very important to prevent introduction of oxygen and reduce pressure through appropriate discharge of venting gas. That is, when venting occurs due to a thermal event, high-temperature venting gas and a high-temperature spark material (e.g., an electrode active material or metal particles constituting an electrode) may be generated. When the high-temperature venting gas and the high-temperature spark material meet oxygen, a fire may occur, and a bigger accident such as an explosion of the battery pack 1 may be caused.

When venting occurs in the battery pack 1, venting gas may be discharged very rapidly at high pressure at the initial stage of the venting. However, venting pressure may decrease toward the late stage of the venting. Accordingly, as the venting gas is discharged rapidly, the venting pressure may rapidly decrease at the late stage of the venting. In this case, a lot of negative pressure may be generated inward from the outside, and thus, a large amount of oxygen may be introduced and may contact high-temperature combustible materials remaining in the battery pack 1, thereby causing a fire. Because the battery pack 1 of the present disclosure includes the vent channel 20 and the discharge delay member 30 provided in the vent channel 20, introduction of oxygen due to generation of negative pressure may be minimized or prevented, and thus, stability in use of the battery pack 1 may be greatly improved.

The discharge delay member 30 may be, for example, a porous sheet-like structure through which venting gas may pass. In this case, venting gas may pass through the discharge delay member 30. When compared to a case where there is no discharge delay member 30, a discharge speed of venting gas may be reduced.

Referring to FIGS. 1 and 2, a plurality of discharge delay members 30 may be provided. The plurality of discharge delay members 30 may be arranged in the first direction (direction parallel to the X axis). In this case, even when gas venting occurs in any of the plurality of battery modules 10, the flow of venting gas introduced into the vent channel 20 from the battery module 10 may be delayed. A channel closing portion may be formed at an end of the vent channel 20 in an extension direction and a channel opening 20a may be formed at the other end of the vent channel 20. Accordingly, when the plurality of discharge delay members 30 are arranged in the first direction as described above, venting gas introduced into the vent channel 20 from a position close to the channel closing portion of the vent channel 20 may pass through the plurality of discharge delay members 30 until it is discharged through the channel opening 20a, thereby sufficiently reducing discharge pressure.

Referring to FIG. 3, the discharge delay member 30 may be configured to be melted by venting gas. That is, the discharge delay member 30 may be configured to have a melting point lower than a temperature of venting gas generated in the battery module 10 of the present disclosure.

A temperature of venting gas may vary according to a specific configuration of a battery cell and the number of battery cells applied to the battery module 10, and the discharge delay member 30 of the present disclosure may be configured to have an appropriate melting point by considering the temperature of the venting gas. For example, the discharge delay member 30 may include a resin and/or rubber material. Even when the discharge delay member 30 is configured to have a low melting point as described above, the discharge delay member 30 may have a porous sheet-like structure as described above. Because venting gas may pass when the discharge delay member 30 is melted, even when a porous sheet-like structure is not applied, the venting gas may be discharged. However, for example, when a melting point of the discharge delay member 30 is not much different from a temperature of venting gas and thus, a time taken for melting is a certain time or more, such a porous sheet-like structure may prevent excessive delay in discharge of venting gas.

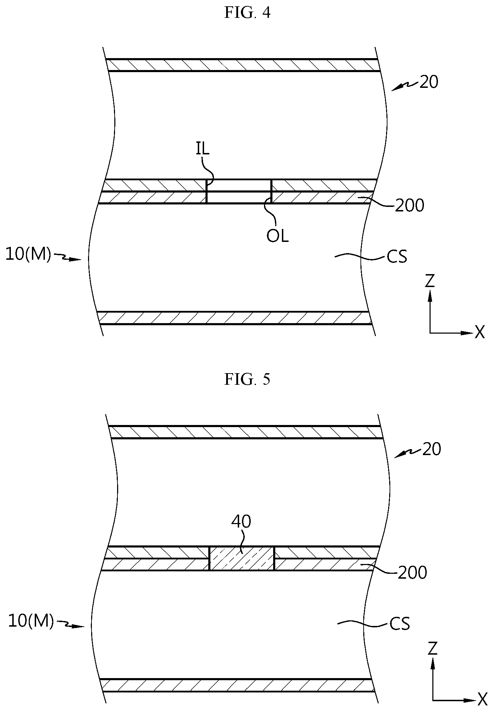

Referring to FIG. 4 together with FIGS. 1 to 3, the battery module 10 may include an outlet OL formed in a surface (surface parallel to the X-Y plane). The outlet OL may be provided in each of the plurality of battery modules 10. The outlet OL may be configured to discharge venting gas therein. The vent channel 20 may include an inlet IL formed in the surface (surface parallel to the X-Y plane). A plurality of inlets IL may be provided. The plurality of inlets IL may be respectively provided at positions corresponding to a plurality of outlets OL.

The inlet IL and the outlet OL may be configured to communicate with each other. Accordingly, venting gas generated in the battery module 10 may be introduced into an inner space of the vent channel 20 through the outlet OL and the inlet IL.

Referring to FIG. 5, the battery pack 1 of the present disclosure may include a passage lid 40 configured to cover at least one of the outlet OL and the inlet IL. The passage lid 40 may be configured to be melted by venting gas. When the passage lid 40 is melted by contacting high-temperature venting gas generated in the battery module 10, the venting gas may be introduced into the vent channel 20 through the outlet OL and the inlet IL.

The passage lid 40 may be configured to have a melting point lower than a temperature of venting gas generated in the battery module 10 of the present disclosure. A temperature of venting gas may vary according to a specific configuration of a battery cell and the number of battery cells applied to the battery module 10, and the passage lid 40 may be configured to have an appropriate melting point by considering the temperature of the venting gas. For example, the passage lid 40 may include a resin and/or rubber material.

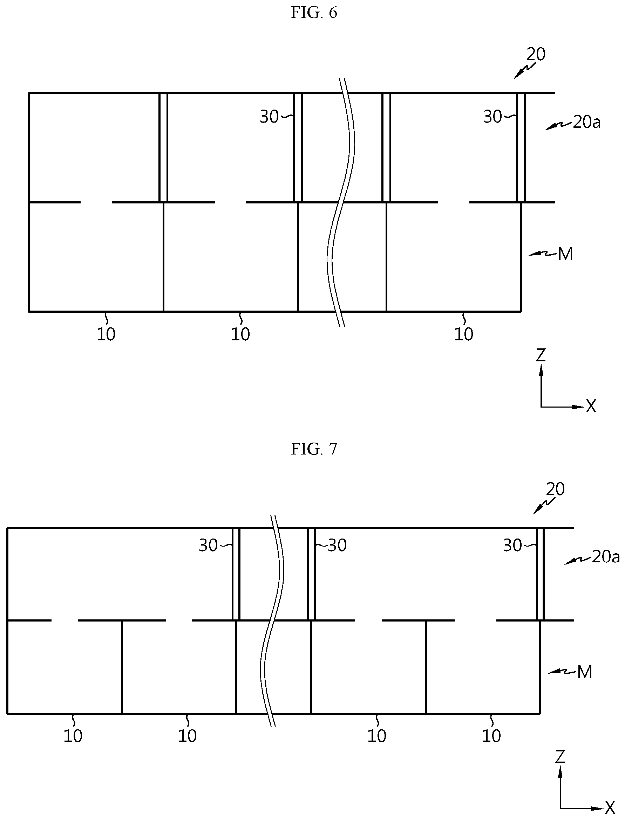

Referring to FIGS. 6 and 7, a space in the vent channel 20 may include a plurality of partition spaces isolated from each other by the discharge delay member 30. In this case, each of the plurality of partition spaces may be configured to communicate with at least one battery module 10. For example, as shown in FIG. 6, one partition space may be configured to communicate with one battery module 10. Unlike this, as shown in FIG. 7, one partition space may be configured to communicate with a plurality of battery modules 10. Although one partition space communicates with two battery modules 10 in FIG. 7, the present disclosure is not limited thereto, and one partition space may be configured to communicate with three or more battery modules 10.

When a partition space in the vent channel 20 is configured to communicate with the battery module 10 in the present disclosure, it may include not only a case where the outlet OL and the inlet IL respectively formed in the battery module 10 and the vent channel 20 are open as shown in FIG. 4 but also a case where the passage lid 40 is applied as shown in FIG. 5. This is because the passage lid 40 is eventually melted and a passage is open when venting gas is generated, as described above.

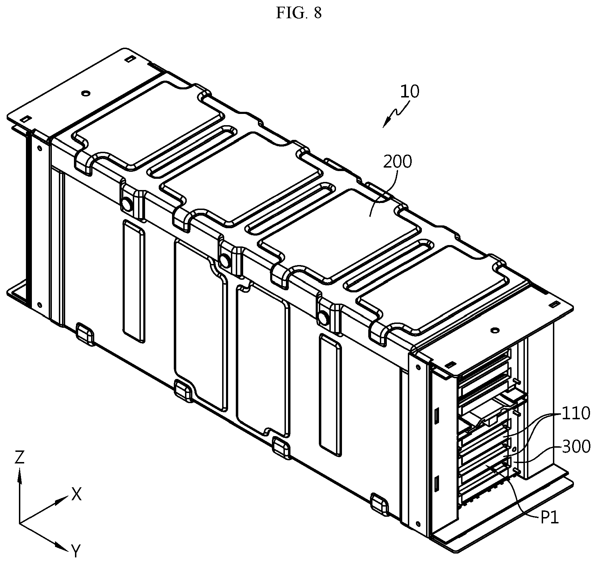

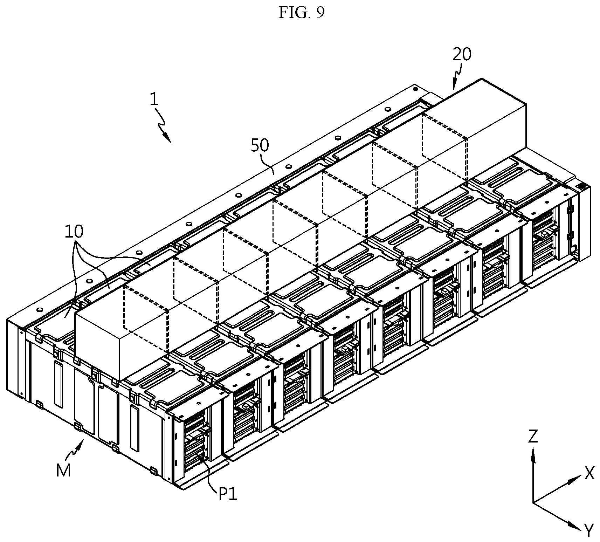

Referring to FIGS. 8 and 9, the battery module 10 of the present disclosure may include a cell assembly CS (see FIGS. 4 and 5) including a plurality of battery cells 100, a module housing 200 in which the cell assembly CS is accommodated, and a cover frame 300 configured to cover an open side of the module housing 200. The battery cell 100 includes an electrode lead 110 connected to an electrode assembly (not shown) therein and drawn out of a cell case. The module housing 200 has a shape with at least one open side. The electrode lead 110 may extend toward the open side of the module housing 200. The cover frame 300 includes a lead slit through which the electrode lead 110 passes. A bus bar may be located on the cover frame 300, and each of a plurality of electrode leads 110 may pass through the lead slit and may be coupled to the bus bar.

When the battery cell 100 of the present disclosure has such a structure, a module opening P1 that is a gap through which venting gas generated in the battery module 10 may be discharged may be formed between the lead slit and the electrode lead 110. The module opening P1 may function as a path through which a cooling fluid (e.g., air) may be introduced when the battery pack 1 is normally used, and may function as a path through which venting gas is discharged when a thermal event occurs.

A plurality of battery modules 10 may be arranged so that the module openings P1 face the same direction. In the module assembly M, the module opening P1 may be formed in another surface (surface parallel to an X-Z plane) substantially perpendicular to the surface (surface parallel to the X-Y plane) on which the vent channel 20 of the present disclosure is located.

According to the invention, the cover frame 300 is configured to be melted by venting gas to close the lead slit. For example, the cover frame 300 may be configured to have a melting point lower than a temperature of venting gas. A temperature of venting gas may vary according to a specific configuration of the battery cell 100 and the number of battery cells 100 applied to the battery module 10, and the cover frame 300 of the present disclosure may be configured to have an appropriate melting point by considering the temperature of the venting gas. For example, the cover frame 300 may include a resin material.

According to this configuration, the cover frame 300 may be melted at the initial stage of generation of venting gas to close the lead slit, and thus, introduction of oxygen through the module opening P1 of the battery module 10 may be blocked. Instead, the battery pack 1 of the present disclosure may guide the venting gas to flow toward the vent channel 20. As such, the flow of venting gas guided toward the vent channel 20 may be delayed by the discharge delay member 30 (see FIGS. 2 and 3) described above, and thus, introduction of oxygen through the vent channel 20 due to generation of negative pressure may be also be minimized.

Considering this function of the cover frame 300, the cover frame 300 may be configured to have a melting point lower than that of the discharge delay member 30 (see FIGS. 2 and 3) and/or the passage lid 40 (see FIG. 5). When the cover frame 300 is configured in this way, discharge of venting gas and a spark material through the module opening P1 of the battery module 10 may be rapidly prevented, and thus, the effect of preventing introduction of oxygen into the battery module 10 may be maximized.

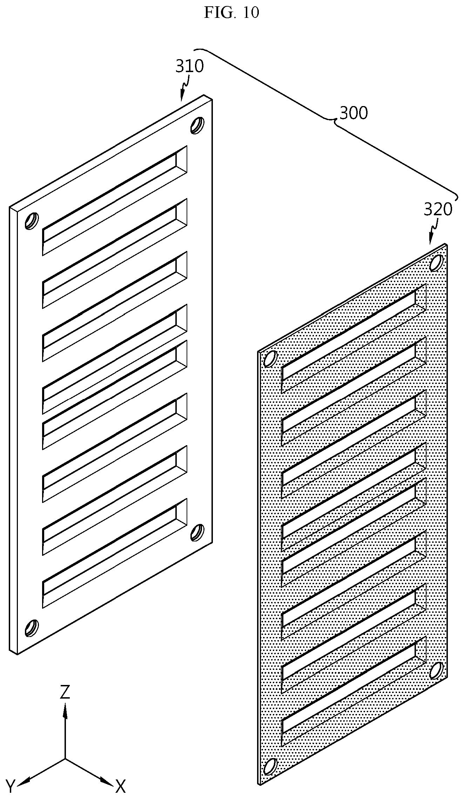

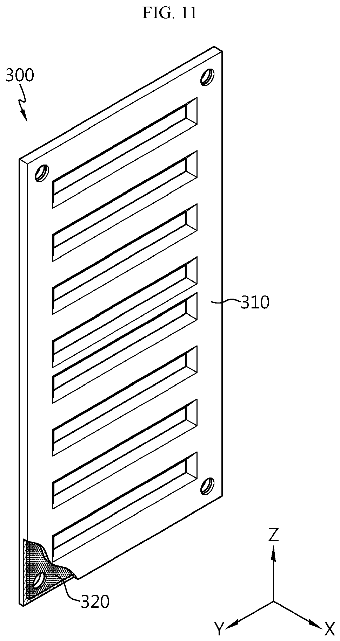

Referring to FIGS. 10 and 11 together with FIGS. 8 and 9, the cover frame 300 may include a first frame 310 and a second frame 320. The first frame 310 may be configured to have a first melting point. The second frame 320 may be configured to have a second melting point higher than the first melting point. The first melting point may be a temperature lower than a temperature of venting gas. The second melting point may be a temperature higher than the temperature of the venting gas. The first cover frame 310 may include, for example, a resin material. The second cover frame 320 may include, for example, a resin material and/or a mica material having a melting point higher than that of the first cover frame 310.

The first cover frame 310 may be configured to cover the module opening P1 of the battery module 10 by being more rapidly melted than the second cover frame 320 in a high-temperature environment due to a thermal event. The second cover frame 320 may be configured to support the electrode lead 110 without being melted for a longer time than the first cover frame 310 in a high-temperature environment due to a thermal event.

According to this configuration, when a degree of melting of the first cover frame 310 becomes severe and thus the first cover frame 310 may no longer structurally support the electrode lead 110, the second cover frame 320 may support the electrode lead 110. Accordingly, a hard short due to unnecessary electrical contact between adjacent electrode leads 110 may be prevented. Furthermore, the occurrence or spread of a fire when a large amount of oxygen is introduced due to complete structural collapse of the cover frame 300 may be prevented.

The first cover frame 310 and the second cover frame 320 may have shapes corresponding to each other. The first cover frame 310 and the second cover frame 320 may include lead slits at positions corresponding to each other.

The cover frame 300 may be configured so that the first cover frame 310 and the second cover frame 320 overlap each other to contact each other or to be spaced apart from each other (see FIG. 10). The first cover frame 310 may be located at an inner position than the second cover frame 320. In this case, the first cover frame 310 having a relatively low melting point may be first exposed to and melted by high-temperature venting gas, to rapidly close the module opening P1.

Alternatively, the cover frame 300 may be configured so that the first cover frame 310 covers the second cover frame 320 (see FIG. 11). The cover frame 300 may be manufactured by using, for example, insert injection. In shit case, the module opening P1 may be rapidly closed when the first cover frame 310 located at an outer position is first exposed to a high-temperature environment and melted.

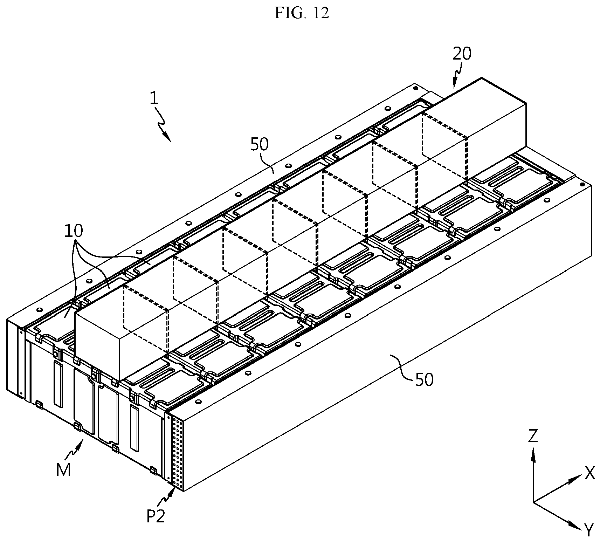

Referring to FIG. 12 together with FIGS. 8 and 9, the battery pack 1 may include a pack cover 50. The pack cover 50 may face the cover frame 300 to cover one side of the module assembly M. When the pack cover 50 is provided, high-temperature venting gas and spark material which may be discharged through the module opening P1 due to a thermal event may be blocked.

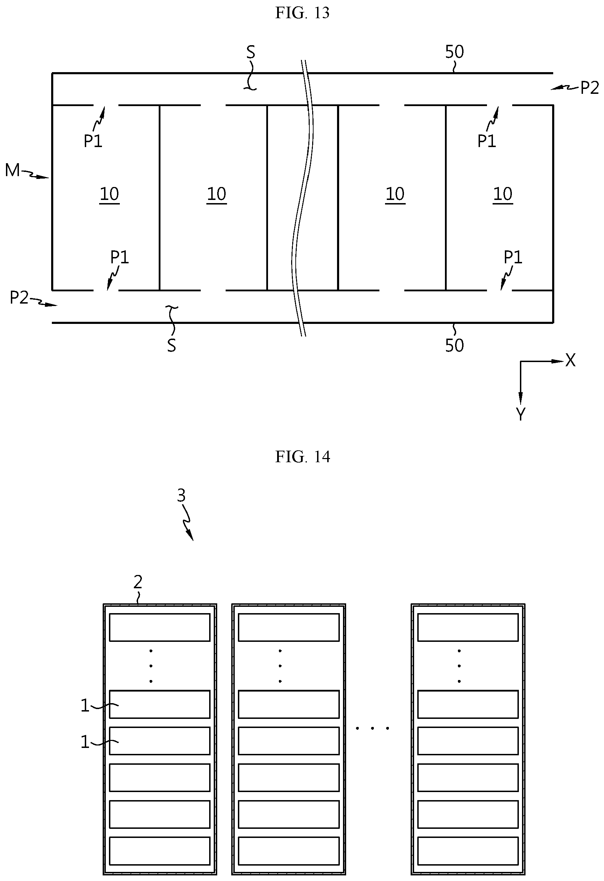

Referring to FIGS. 12 and 13 together, the battery pack 1 may include a pack opening P2. The pack opening P2 may be formed at at least one of both ends of a space S formed between the module assembly M and the pack cover 50 in the first direction (direction parallel to the X axis). When the pack opening P2 is provided, a cooling fluid may be efficiently circulated through the space formed between the pack cover 50 and the module assembly M.

As shown in FIG. 13, the module openings P1 may be respectively formed on both sides of the battery module 10. The pack covers 50 may be provided on both sides of the module assembly M. The pack openings P2 may be respectively formed at an end of the space S formed between one side of the module assembly M and the pack cover 50 in the extension direction (direction parallel to the X axis) and at the other end of the space S formed between the other side of the module assembly M and the pack cover 50 in the extension direction (direction parallel to the X axis).

According this configuration, when the battery pack 1 is normally used, because a cooling fluid introduced through any one of a pair of pack openings P2 passes through the inside of each battery module 10 and is discharged through the pack opening P2 located on the opposite side, efficient cooling may be performed. However, when a thermal event occurs, the battery pack 1 may be configured to block introduction of oxygen through such a cooling circulation path, and thus, safety in use of the battery pack 1 may be greatly improved.

Referring to FIG. 14, an energy storage system (ESS) 3 according to an embodiment of the present disclosure includes the battery pack 1 according to the present disclosure. The ESS 3 may include a battery system including a plurality of battery packs 1 and a rack housing 2 in which the plurality of battery packs 1 may be stacked. The ESS 3 may include one or more battery systems.

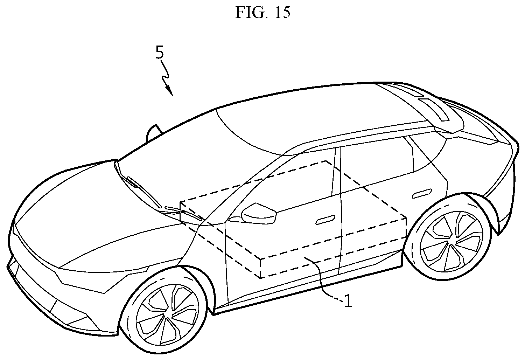

Referring to FIG. 15, a vehicle 5 according to an embodiment of the present disclosure includes the battery pack 1 according to the present disclosure. The vehicle 5 may be driven by receiving power from one or more battery packs 1. The vehicle 5 may be, for example, an electric vehicle (EV) or a hybrid electric vehicle (HEV).

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

### [Description of Reference Numerals]

1: battery pack
2: rack housing
3: energy storage system (ESS)
5: vehicle
10: battery module
P1: module opening
OL: outlet
M: module assembly
100: battery cell
CS: cell assembly
110: electrode lead
200: module housing
300: cover frame
310: first frame
320: second frame
20: vent channel
IL: inlet
20a: channel opening
30: discharge delay member
40: passage lid
50: pack cover
S: space
P2: pack opening

## Claims

1. A battery pack (1) comprising:
a module assembly (M) comprising a plurality of battery modules (10) arranged in a first direction;
a vent channel (20) located on a surface of the module assembly (M) and configured to communicate with each of the plurality of battery modules (10); and
a discharge delay member (30) provided in the vent channel (20) and configured to delay discharge of venting gas generated in at least some of the plurality of battery modules (10) and introduced into the vent channel (20),
wherein a plurality of discharge delay members (30) are provided,
wherein the plurality of discharge delay members (30) are arranged in the first direction,
wherein each of the plurality of battery modules (10) comprises:
a cell assembly (CS) comprising a plurality of battery cells (100) each comprising an electrode lead (110);
a module housing (200) comprising at least one open side and configured to accommodate the cell assembly (CS); and
a cover frame (300) comprising a lead slit through which the electrode lead (110) passes and configured to cover the at least one open side of the module housing (200), and
**characterized in that**
the cover frame (300) is configured to be melted by the venting gas to close the lead slit.

2. The battery pack (1) according to claim 1, wherein the discharge delay member (30) is configured to be melted by the venting gas.

3. The battery pack (1) according to claim 1, wherein each of the plurality of battery modules (10) comprises an outlet (OL) configured to discharge venting gas in the battery module (10), and
the vent channel (20) comprises a plurality of inlets (IL) each formed at a position corresponding to the outlet (OL).

4. The battery pack (1) according to claim 4, further comprising a passage lid (40) configured to cover at least one of the outlet (OL) and the inlet (IL) and to be melted by the venting gas.

5. The battery pack (1) according to claim 1, wherein a space in the vent channel comprises a plurality of partition spaces isolated from each other by the discharge delay member (30),
wherein each of the plurality of partition spaces communicates with at least one battery module (10).

6. The battery pack (1) according to claim 1, wherein the cover frame (300) comprises:
a first cover frame (310) configured to have a first melting point; and
a second cover frame (320) configured to have a second melting point higher than the first melting point.

7. The battery pack (1) according to claim 6, wherein the first melting point is a temperature lower than a temperature of the venting gas, and the second melting point is a temperature higher than the temperature of the venting gas.

8. The battery pack (1) according to claim 7, wherein the cover frame (300) is configured so that the first cover frame (310) and the second cover frame (320) overlap each other to contact each other or to be spaced apart from each other, or is configured so that the first cover frame (310) covers the second cover frame (320).

9. The battery pack (1) according to claim 1, further comprising a pack cover (50) facing the cover frame (300) to cover a side of the module assembly (M).

10. The battery pack (1) according to claim 9, further comprising a pack opening (P2) formed at at least one of both ends of a space (S) formed between the module assembly (M) and the cover frame (50) in the first direction.

11. An energy storage system (ESS) (3) comprising the battery pack (1) according to any one of claims 1 to 10.

12. A vehicle (5) comprising the battery (1) pack according to any one of claims 1 to 11.

## Patentansprüche

1. Batteriepack (1), umfassend:
eine Modulanordnung (M), welche eine Mehrzahl von Batteriemodulen (10) umfasst, welche in einer ersten Richtung angeordnet sind;
einen Entlüftungskanal (20), welcher sich an einer Fläche der Modulanordnung (M) befindet und dazu eingerichtet ist, mit jedem der Mehrzahl von Batteriemodulen (10) in Verbindung zu stehen; und
ein Entladungsverzögerungselement (30), welches in dem Entlüftungskanal (20) bereitgestellt ist und dazu eingerichtet ist, eine Ableitung von in wenigstens einigen der Mehrzahl von Batteriemodulen (10) erzeugtem und in den Entlüftungskanal (20) eingeleitetem Entlüftungsgas zu verzögern,
wobei eine Mehrzahl von Entladungsverzögerungselementen (30) bereitgestellt ist,
wobei die Mehrzahl der Entladungsverzögerungselemente (30) in der ersten Richtung angeordnet ist,
wobei jedes der Mehrzahl von Batteriemodulen (10) umfasst:
eine Zellenanordnung (CS), welche eine Mehrzahl von Batteriezellen (100) umfasst, welche jeweils eine Elektrodenleitung (110) aufweisen;
ein Modulgehäuse (200), welches wenigstens eine offene Seite aufweist und dazu eingerichtet ist, die Zellenanordnung (CS) aufzunehmen; und
einen Abdeckrahmen (300), welcher einen Leitungsschlitz umfasst, durch welchen die Elektrodenleitung (110) verläuft, und welcher dazu eingerichtet ist, die wenigstens eine offene Seite des Modulgehäuses (200) abzudecken, und
**dadurch gekennzeichnet, dass**
der Abdeckrahmen (300) dazu eingerichtet ist, durch das Entlüftungsgas geschmolzen zu werden, um den Leitungsschlitz zu schließen.

2. Batteriepack (1) nach Anspruch 1, wobei das Entladungsverzögerungselement (30) dazu eingerichtet ist, durch das Entlüftungsgas geschmolzen zu werden.

3. Batteriepack (1) nach Anspruch 1, wobei jedes der Mehrzahl von Batteriemodulen (10) einen Auslass (OL) umfasst, welcher dazu eingerichtet ist, Entlüftungsgas in dem Batteriemodul (10) abzuleiten, und
der Entlüftungskanal (20) eine Mehrzahl von Einlässen (IL) umfasst, welche jeweils an einer dem Auslass (OL) entsprechenden Position gebildet sind.

4. Batteriepack (1) nach Anspruch 4, ferner umfassend einen Durchgangsdeckel (40), welcher dazu eingerichtet ist, wenigstens einen aus dem Auslass (OL) und dem Einlass (IL) abzudecken und durch das Entlüftungsgas geschmolzen zu werden.

5. Batteriepack (1) nach Anspruch 1, wobei ein Raum in dem Entlüftungskanal eine Mehrzahl von Trennräumen umfasst, welche durch das Entladungsverzögerungselement (30) voneinander isoliert sind,
wobei jeder der Mehrzahl von Trennräumen mit wenigstens einem Batteriemodul (10) in Verbindung steht.

6. Batteriepack (1) nach Anspruch 1, wobei der Abdeckrahmen (300) umfasst:
einen ersten Abdeckrahmen (310), welcher dazu eingerichtet ist, einen ersten Schmelzpunkt aufzuweisen; und
einen zweiten Abdeckrahmen (320), welcher dazu eingerichtet ist, einen zweiten Schmelzpunkt aufzuweisen, welcher höher als der erste Schmelzpunkt ist.

7. Batteriepack (1) nach Anspruch 6, wobei der erste Schmelzpunkt eine Temperatur ist, welche niedriger als eine Temperatur des Entlüftungsgases ist, und der zweite Schmelzpunkt eine Temperatur ist, welche höher als die Temperatur des Entlüftungsgases ist.

8. Batteriepack (1) nach Anspruch 7, wobei der Abdeckrahmen (300) derart eingerichtet ist, dass der erste Abdeckrahmen (310) und der zweite Abdeckrahmen (320) einander derart überlappen, dass sie einander kontaktieren oder dass sie voneinander beabstandet sind, oder derart eingerichtet ist, dass der erste Abdeckrahmen (310) den zweiten Abdeckrahmen (320) abdeckt.

9. Batteriepack (1) nach Anspruch 1, ferner umfassend eine Packabdeckung (50), welche dem Abdeckrahmen (300) zugewandt ist, um eine Seite der Modulanordnung (M) abzudecken.

10. Batteriepack (1) nach Anspruch 9, ferner umfassend eine Packöffnung (P2), welche an wenigstens einem von beiden Enden eines Raums (S) gebildet ist, welcher in der ersten Richtung zwischen der Modulanordnung (M) und der Packabdeckung (50) gebildet ist.

11. Energiespeichersystem (ESS) (3), umfassend den Batteriepack (1) nach einem der Ansprüche 1 bis 10.

12. Fahrzeug (5), umfassend den Batteriepack (1) nach einem der Ansprüche 1 bis 11.

## Revendications

1. Bloc-batterie (1), comprenant :
un ensemble de modules (M) comprenant une pluralité de modules de batterie (10) agencés dans une première direction ;
un canal de dégazage (20) situé sur une surface de l'ensemble de modules (M) et configuré pour communiquer avec chaque module de batterie de la pluralité de modules de batterie (10) ; et
un élément de retardement d'évacuation (30) situé dans le canal de dégazage (20) et configuré pour retarder l'évacuation du gaz de dégazage généré dans au moins une partie de la pluralité de modules de batterie (10) et introduit dans le canal de dégazage (20),
dans lequel une pluralité d'élément de retardement d'évacuation (30) sont prévus,
dans lequel la pluralité d'élément de retardement d'évacuation (30) sont agencés dans la première direction,
dans lequel chacun de la pluralité de modules de batterie (10) comprend :
un ensemble d'éléments (CS) comprenant une pluralité d'éléments de batterie (100) comprenant chacun un fil d'électrode (110) ;
un boîtier de module (200) comprenant au moins un côté ouvert et configuré pour loger l'ensemble d'éléments (CS) ; et
un cadre de recouvrement (300) comprenant une fente pour fil par laquelle passe le fil d'électrode (110) et configuré pour recouvrir l'au moins un côté ouvert du boîtier de module (200), et
**caractérisé en ce que** :
le cadre de recouvrement (300) est configuré pour être fondu par le gaz de dégazage pour fermer la fente pour fil.

2. Bloc-batterie (1) selon la revendication 1, dans lequel l'élément de retardement d'évacuation (30) est configuré pour être fondu par le gaz de dégazage.

3. Bloc-batterie (1) selon la revendication 1, dans lequel chaque module de batterie de la pluralité de modules de batterie (10) comprent une sortie (OL) configurée pour évacuer le gaz de dégazage présent dans le module de batterie (10), et
le canal de dégazage (20) comprend une pluralité d'entrées (IL) formées chacune au niveau d'une position correspondant à la sortie (OL).

4. Bloc-batterie (1) selon la revendication 4, comprenant en outre un couvercle de passage (40) configuré pour recouvrir la sortie (OL) et/ou l'entrée (IL) et pour être fondu par le gaz de dégazage.

5. Bloc-batterie (1) selon la revendication 1, dans lequel un espace dans le canal de dégazage comprend une pluralité d'espaces de partition isolés les uns des autres par l'élément de retardement d'évacuation (30),
dans lequel chaque espace de partition de la pluralité d'espaces de partition communique avec au moins un module de batterie (10).

6. Bloc-batterie (1) selon la revendication 1, dans lequel le cadre de recouvrement (300) comprend :
un premier cadre de recouvrement (310) configuré pour avoir un premier point de fusion ; et
un second cadre de recouvrement (320) configuré pour avoir un second point de fusion supérieur au premier point de fusion.

7. Bloc-batterie (1) selon la revendication 6, dans lequel le premier point de fusion est une température inférieure à une température du gaz de dégazage, et le second point de fusion est une température supérieure à la température du gaz de dégazage.

8. Bloc-batterie (1) selon la revendication 7, dans lequel le cadre de recouvrement (300) est configuré de telle sorte que le premier cadre de recouvrement (310) et le second cadre de recouvrement (320) se chevauchent l'un l'autre pour être en contact entre eux ou pour être espacés l'un de l'autre, ou est configuré de telle sorte que le premier cadre de recouvrement (310) recouvre le second cadre de recouvrement (320).

9. Bloc-batterie (1) selon la revendication 1, comprenant en outre un capot de bloc (50) en regard du cadre de recouvrement (300) pour recouvrir un côté de l'ensemble de modules (M).

10. Bloc-batterie (1) selon la revendication 9, comprenant en outre une ouverture de bloc (P2) formée au niveau d'au moins une des deux extrémités d'un espace (S) formé entre l'ensemble de modules (M) et le cadre de recouvrement (50) dans la première direction.

11. Système de stockage d'énergie (ESS) (3), comprenant le bloc-batterie (1) selon l'une quelconque des revendications 1 à 10.

12. Véhicule (5), comprenant le bloc-batterie (1) selon l'une quelconque des revendications 1 à 11.
